# EUROPÄISCHE PATENTANMELDUNG

(11) **EP 0 990 882 A1**
(43) Veröffentlichungstag der Anmeldung: **05.04.2000**
(21) Anmeldenummer: 98810986.4
(22) Anmeldetag: 30.09.1998
(51) Int. Cl.: G01K 17/06

(54) **System zur Ermittlung des Energieverbrauchs**

(71) Anmelder: Bernina Electronic AG, 8266 Steckborn (CH)
(72) Erfinder: Ruhland, Michael, 78337 Oehningen-Wangen (DE)
(74) Vertreter: AMMANN PATENTANWAELTE AG BERN

(57) **Zusammenfassung**

System zur Ermittlung des Energieverbrauchs von einer Vielzahl von Verbrauchsstellen, z.B. Heizkörpern, (11, 21, 31, 41) welche Energie, z.B. Wärme, von einer und derselben Energiequelle (51), z.B. einer Heizungsanlage, beziehen,
bei welchem System an jeder Verbrauchsstelle (11, 21, 31, 41) eine Verbrauchsmessvorrichtung (12, 22, 32, 42) angebracht ist, welche eine Messeinheit (13, 23, 33 bzw. 43) und eine Ableseeinheit (14, 24, 34 bzw. 44) enthält. Um jedem Verbraucher die Möglichkeit zu geben, in seiner Wohnung bzw. Büro, eine Verbrauchsmessvorrichtung für ein Ableseverfahren seiner Wahl installieren zu lassen, enthalten die Verbrauchsmessvorrichtungen (12, 22, 32, 42) aller Verbrauchsstellen (11, 21, 31, 41) gleiche Messeinheiten (13, 23, 33, 43) und bei wenigstens zwei der Verbrauchsstellen (11, 21, 31, 41) sind Verbrauchsmessvorrichtungen (12, 22, 32, 42) mit Ableseeinheiten (14, 24, 34 bzw. 44) für verschiedene Ableseverfahren vorhanden.

## Beschreibung

System zur Ermittlung des Energieverbrauchs von einer Vielzahl von Verbrauchsstellen gemäss dem Oberbegriff des Anspruchs 1.

Zur Ermittlung des Energieverbrauchs, z.B. für Heizkostenverteiler-Systeme, gibt es heute Verbrauchsmessvorrichtungen verschiedener Bauart. Eine solche Verbrauchsmessvorrichtung besteht im wesentlichen aus einer Messeinheit und einer damit verbundenen Ableseeinheit.

Je nach Bauart hat eine solche Verbrauchsmessvorrichtung eine Ableseeinheit, die für ein bestimmtes Ableseverfahren geeignet ist, z. B. für manuelle Ablesung, für Ablesung mittels Datenträger, mittels Datenbus, oder für eine per Funk ferngesteuerte Ablesung. Verbrauchsmessvorrichtungen für manuelle Ablesung sind die billigsten, haben aber den Nachteil, dass das zuständige Personal die Wohnung oder das Büro des Verbrauchers betreten muss, um die Ablesung vorzunehmen. Dieser Nachteil kann mit etwas teuren Verbrauchsmessvorrichtungen für Ablesung mittels Datenträger oder mittels Datenbus vermieden werden. Solche Verbrauchsmessvorrichtungen müssen aber in der Regel vom Verbraucher zu bestimmten Zeitpunkten bedient werden. Eine vollautomatisierte Ablesung ist mit den allerdings noch teuren Verbrauchsmessvorrichtungen, die für eine per Funk ferngesteuerte Ablesung geeignet sind.

Innerhalb einer Serie von Verbrauchsmessvorrichtungen gleicher Bauart, die für ein und dasselbe Ableseverfahren geeignet sind, und die gleiche Messeinheit haben, ist die Einhaltung der vorgeschriebenen Toleranzwerte mit den heutigen technischen Mittel sichergestellt. Dies ist jedoch bei bekannten Verbrauchsmessvorrichtungen für verschiedene Ableseverfahren nicht der Fall, weil diese unterschiedliche Messeinheiten haben.

Es ist daher nicht möglich, innerhalb einer Abrechnungseinheit, z.B. einer Anzahl Wohneinheiten, welche die darin benötigte Heizungsleistung von einer gemeinsamen zentralen Heizungsanlage Messgeräten beziehen, Verbrauchsmessvorrichtungen zu verwenden, welche für verschiedene Ableseverfahren geeignet sind. Derzeit werden daher innerhalb einer Abrechnungseinheit alle Wohneinheiten mit Verbrauchsmessvorrichtungen einer und derselben bestimmten Bauart für dasselbe Ableseverfahren ausgerüstet. Es wäre jedoch erwünscht, jedem Verbraucher die Möglichkeit zu geben, in seiner Wohnung bzw. Büro, eine Verbrauchsmessvorrichtung für ein Ableseverfahren seiner Wahl installieren zu lassen.

Der Erfindung liegt daher die Aufgabe zugrunde ein System der oben erwähnten Art zur Verfügung zu stellen, bei dem an den Verbrauchsstellen Verbrauchsmessvorrichtungen für verschiedene Ableseverfahren verwendet werden können.

Diese Aufgabe wird erfindungsgemäss mit einem System gemäss dem Anspruch 1 gelöst.

Der mit der Erfindung erzielte Vorteil liegt im wesentlichen darin, dass innerhalb einer Abrechnungseinheit an den Verbrauchsstellen Verbrauchsmessvorrichtungen für verschiedene Ableseverfahren verwendet werden können.

Ein Ausführungsbeispiel wird nachstehend anhand der beiliegenden Figuren beschrieben. Es zeigen
Fig. 1 eine schematische Darstellung eines erfindungsgemässen Systems.
Fig. 2 ein Blockdiagramm einer Messeinheit, welche im System gemäss Fig. 1 bei allen Verbrauchsstellen 11, 21, 31, 41 verwendet wird.

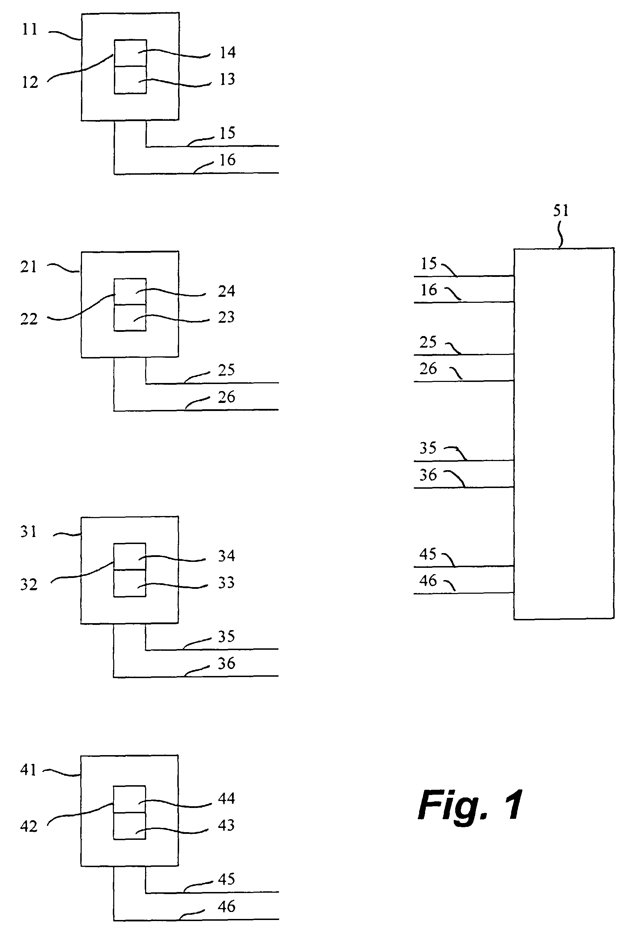

Wie aus Figur 1 ersichtlich, umfasst ein erfindungsgemässes System eine Vielzahl von Verbrauchsstellen, z.B. Heizkörpern 11, 21, 31, 41, welche durch Leitungen 15, 16; 25, 26; 35, 36 bzw. 45, 46 Heizungswasser und somit Energie von einer und derselben Heizungsanlage beziehen.

Zur Ermittlung des Energieverbrauchs der Vielzahl von Heizkörpern 11, 21, 31, 41 ist an jedem von denen eine Verbrauchsmessvorrichtung 12, 22, 32, 42 angebracht, welche eine Messeinheit 13, 23, 33 bzw. 43 und eine Ableseeinheit 14, 24, 34 bzw. 44 enthält.

Erfindungsgemäss enthalten alle Verbrauchsmessvorrichtungen 12, 22, 32 bzw. 42 gleiche Messeinheiten 13, 23, 33 bzw. 43 und bei wenigstens zwei der Heizkörper 11, 21, 31, 41 sind Verbrauchsmessvorrichtungen 12, 22, 32, 42 mit Ableseeinheiten 14, 24, 34 bzw. 44 für verschiedenen Ableseverfahren vorhanden.

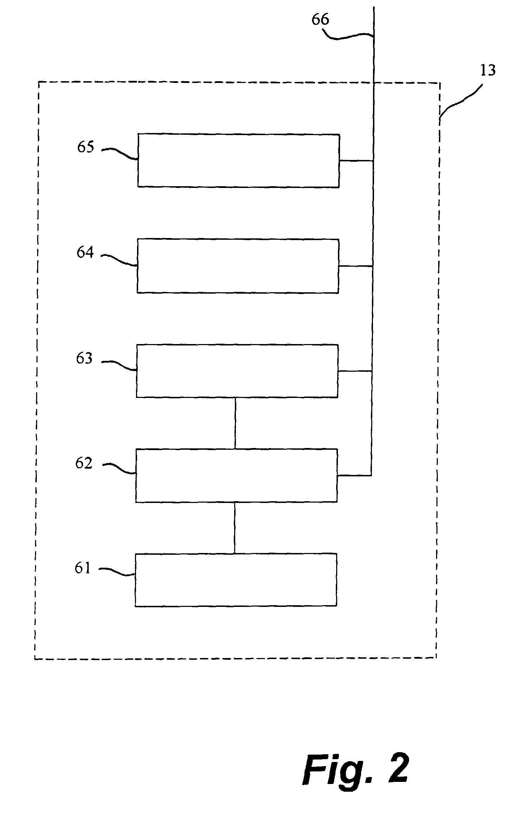

Anhand der Fig. 2 wird nachstehend die Struktur der Messeinheit 13 beschrieben. Alle übrigen Messeinheiten 23, 33 bzw. 43 haben die gleiche Struktur und Funktionsweise wie die Messeinheit 13.

Wie aus Fig. 2 ersichtlich, enthält die Messeinheit 13 einen Sensor 61 zur Messung der Temperatur des Heizkörpers, eine Messelektronik 62 zur Verarbeitung des Ausgangsignals des Sensors 61, einen Mikroprozessor 63 zur Ausführung der Berechnung des Energieverbrauchs, einen Programm-Speicher 64 zur Speicherung des Programms zur Durchführung der soeben erwähnten Berechnung, eine Anzeige 65, mit der die Anzahl der berechneten Energieverbraucheinheiten angezeigt werden, und eine elektrische Leitung 66 über die das Ausgangsignal der Messeinheit an der damit verbundene Ableseeinheit abgegeben wird.

In einer bevorzugten Ausführungsform ist die Messeinheit 13 mit einem zusätzlichen Sensor zur Messung der Raumtemperatur verbunden. In diesem Fall werden die Signale von beiden Sensoren in der Messelektronik 62 verarbeitet und die Berechnung des Energieverbrauchs wird mit einem geeigneten Programm durchgeführt, welches im Programm-Speicher 64 gespeichert ist.

In der Regel und wie in der Fig. 1 dargestellt, ist jede der Messeinheiten 13, 23, 33 bzw. 43 mit einer Ableseeinheit 14, 24, 34 bzw. 44 verbunden. In der einfachsten Ausführungsform einer Verbrauchsmessvorrichtung ist aber die Anzeige der Messeinheit als einzige Ableseeinheit vorgesehen. In diesem Fall enthält die Verbrauchsmessvorrichtung nur die Messeinheit und keine separate Ableseeinheit.

Im vorliegenden Ausführungsbeispiel ist die Ableseeinheit 14 der Verbrauchsmessvorrichtung 12 mit der Anzeige 65 der Messeinheit 13 identisch. Die Verbrauchsmessvorrichtung 12 enthält keine andere Mittel zur direkten Übermittlung der mit der Messeinheit 13 gemessenen Verbrauchseinheiten an der zentralen Abrechnungsstelle. Mit der Verbrauchsmessvorrichtung 12 ist daher nur eine visuelle Ablesung der Verbrauchseinheiten durch das zuständige Personal möglich.

Die Ableseeinheit 24 der Verbrauchsmessvorrichtung 22 enthält ein Interface, mit dem eine Übermittlung der mit der Messeinheit 23 gemessenen Verbrauchseinheiten an der zentralen Abrechnungsstelle mittels eines Datenträgers (z.B. eine Chipkarte) möglich ist.

Die Ableseeinheit 34 der Verbrauchsmessvorrichtung 32 enthält einen Modem, über den eine Übermittlung der mit der Messeinheit 33 gemessenen Verbrauchseinheiten an der zentralen Abrechnungsstelle via Telefonnetz möglich ist.

Die Ableseeinheit 44 der Verbrauchsmessvorrichtung 42 enthält einen Funk-Sender/Empfänger, der eine per Funk ferngesteuerte Ablesung der mit der Messeinheit 43 gemessenen Verbrauchseinheiten an der zentralen Abrechnungsstelle ermöglicht.

## Patentansprüche

1. System zur Ermittlung des Energieverbrauchs von einer Vielzahl von Verbrauchsstellen welche Energie, z.B. Wärme, von einer und derselben Energiequelle (51), z.B. einer Heizungsanlage, beziehen,
bei welchem System an jeder Verbrauchsstelle (11, 21, 31, 41) eine Verbrauchsmessvorrichtung (12, 22, 32, 42) angebracht ist, welche eine Messeinheit (13, 23, 33 bzw. 43) und eine Ableseeinheit (14, 24, 34 bzw. 44) enthält,
dadurch gekennzeichnet, dass
(a) die Verbrauchsmessvorrichtungen (12, 22, 32, 42) aller Verbrauchsstellen (11, 21, 31, 41) gleiche Messeinheiten (13, 23, 33, 43) enthalten,und
(b) wenigstens zwei der Verbrauchsstellen (11, 21, 31, 41) Verbrauchsmessvorrichtungen (12, 22, 32, 42) mit Ableseeinheiten (14, 24, 34 bzw. 44) für verschiedene Ableseverfahren vorhanden sind.
